# EUROPÄISCHE PATENTSCHRIFT

(11) **EP 0 695 934 B1**
(45) Veröffentlichungstag und Bekanntmachung des Hinweises auf die Patenterteilung: **18.06.1997**
(21) Anmeldenummer: 94111703.8
(22) Anmeldetag: 27.07.1994
(51) Int. Cl.: G01L 7/04

(54) **Verbindungsvorrichtung für ein Manometer und Verfahren zu seiner Herstellung**
Connection device for a manometer and method of manufacturing
Dispositif de connexion pour un monomètre et méthode pour sa fabrication

(43) Veröffentlichungstag der Anmeldung: 07.02.1996
(73) Patentinhaber: WIKA ALEXANDER WIEGAND GmbH & CO., D-63911 Klingenberg (DE)
(72) Erfinder: Wahl, Detlef, D-63906 Erlenbach (DE); Meisenzahl, Burkhard, D-63927 Bürgstadt (DE); Berninger, Jürgen, D-63911 Klingenberg (DE); Schäfer, Klaus, D-64732 Bad König (DE); Berninger, Helmut, D-63785 Obernburg (DE)
(74) Vertreter: Grams, Klaus Dieter, Dipl.-Ing.

(56) Entgegenhaltungen:
- CH-A- 375 933
- DE-A- 2 743 785
- DE-A- 2 809 787
- DE-C- 3 508 246
- US-A- 2 116 628

## Beschreibung

Es ist ein Meßsystem für ein Manometer bekannt, das eine innen mit dem zu messenden Druck beaufschlagte Rohrfeder sowie einen Federträger aufweist, an dem die Rohrfeder mit ihrem einen, ersten Ende befestigt ist. Im Federträger ist ein Anschlußkanal ausgebildet, der einerseits mit dem Inneren der Rohrfeder in Verbindung steht und andererseits im Betrieb in Verbindung steht mit einem System, das ein Druckmedium führt, dessen Druck gemessen werden soll. Ein solches Meßsystem bildet üblicherweise zusammen mit einem Zeigerwerk, einem Zeiger, einem Zifferblatt und einem Gehäuse, das eine Sichtscheibe aufweist, ein Manometer. In Abhängigkeit vom Druck des Druckmediums wird das freie, zweite Ende der Rohrfeder mehr oder weniger weit ausgelenkt. Diese Auslenkung wird mittels einer Zugstange zum Zeigerwerk übertragen und vom Zeigerwerk in eine Drehstellung des Zeigers umgewandelt, so daß ein Vergleich der Zeigerstellung mit der Skala des Zifferblattes es ermöglicht, den dem gemessenen Druck zugeordneten Druckwert abzulesen.

Die Rohrfeder eines solchen Meßsystems besteht aus einem metallischen Werkstoff, beispielsweise aus legiertem oder unlegiertem Stahl, aus Kupfer- oder Kupferknetlegierungen oder aus Monel. Es war lange Zeit üblich, auch den Federträger aus einem metallischen Werkstoff zu fertigen und das eine, erste Ende der Rohrfeder mit dem Federträger zu verlöten, um das Meßsystem aus Rohrfeder und Federträger herzustellen. Um den Federträger aus einem metallischen Werkstoff herzustellen, ist eine maschinelle Bearbeitung erforderlich, die verhältnismäßig zeit- und kostenaufwendig ist. Um diese Material- und Herstellungskosten zu verringern, ist es bereits bekannt, den Federträger aus einem polymeren Kunststoff zu fertigen. Bei diesem Vorgehen scheidet die Möglichkeit aus, das erste Ende der metallischen Rohrfeder unmittelbar mit dem Federträger zu verlöten.

Durch die Veröffentlichungen DE-17 99 009-U, DE-80 02 155-U, DE-20 49 633-A und US-4 337 664-A ist es bekannt, das erste Ende des Federträgers mit Hilfe eines Bindemittels mit einem Federträger aus Kunststoff zu verkleben. Zu diesem Zweck wird im Federträger eine der Form des ersten Endes der Rohrfeder angepaßte Öffnung ausgebildet, in die das erste Ende unter Zugabe eines geeigneten Bindemittels eingeschoben wird. Insbesondere wegen der durch die verschiedenen Werkstoffe von Rohrfeder und Federträger verursachten unterschiedlichen Wärmedehnung dieser beiden Bauteile kann es im Laufe einer längeren Betriebszeit des Meßsystems zu Undichtheiten und somit zu Ausfällen des Meßsystems kommen. Wenn dem durch eine entsprechend dicke, elastische Bindemittelschicht vorgebeugt wird, ist die geometrisch genau definierte Festhaltung des ersten Endes der Rohrfeder am Federträger nicht mehr gewährleistet.

Ferner ist es durch die Veröffentlichungen DE-17 99 009-U, DE-20 49 633-A, DE-24 08 369-A, DE-21 40 086-B1, DD-91 142-B, DD-99 225-B und DD-101 487-B bekannt, das erste Ende der Rohrfeder während des Spritzgießens des Federträgers zu umspritzen. Dabei treten jedoch ähnliche Probleme hinsichtlich der Dichtheit wie im Falle des Einklebens sowie zusätzliche Probleme aufgrund der unter dem Spritzdruck erfolgenden Deformation des ersten Endes der Rohrfeder auf, wenn keine zusätzlichen Maßnahmen getroffen werden. Solche zusätzlichen Maßnahmen sind durch die Veröffentlichungen DE-21 40 086-B1, DD-91 142-B, DD-99 225-B und DD-101 487-B bekannt und bestehen im wesentlichen aus einer bestimmten geometrischen Gestaltung des ersten Endes der Rohrfeder und/oder zusätzlichen Einsätzen und Ansätzen am ersten Ende der Rohrfeder. Durch diese Maßnahmen wird jedoch das Auslenkverhalten der Rohrfeder verändert. Zudem geht der Kostenvorteil, der aus der Herstellung des Federträgers aus einem polymeren Kunststoff resultiert, zumindest teilweise wieder verloren.

Ein Meßsystem mit den Merkmalen des Oberbegriffs von Patentanspruch 1 sowie ein Verfahren zur Herstellung eines solchen Meßsystems mit den Merkmalen des Oberbegriffs von Patentanspruch 16 sind durch die Veröffentlichung DE-17 99 009-U, insbesondere Fig. 2a, bekannt.

Dieses bekannte Meßsystem weist ein metallisches Zwischenteil auf, mit dem das erste Ende der Rohrfeder fest verbunden ist. Das Zwischenteil ist ringförmig und weist eine radiale Öffnung auf, die in das Innere der Rohrfeder mündet, die am Zwischenteil angelötet ist. Dieses Zwischenteil ist unter Zwischenfügung von Dichtungsscheiben am Federträger mittels einer Schraube befestigt, wobei in der Schraube ein Kanal ausgebildet ist, der eine Verbindung zwischen der Öffnung des Zwischenteils und dem Anschlußkanal im Federträger herstellt. Gemäß dem bekannten Verfahren wird zunächst das erste Ende der Rohrfeder mit dem Zwischenteil verlötet, bevor dieses mittels der Schraube am Federträger angeschraubt wird. Bei diesem bekannten Meßsystem ist den vorstehend erläuterten Undichtheiten, die beim Einkleben oder beim einfachen Umspritzen auftreten können, vorgebeugt. Der Herstellungsaufwand ist jedoch aufgrund der benötigten Bauteile und der vergleichsweise komplizierten Montage erheblich.

Der Erfindung liegt die Aufgabe zugrunde, das gattungsgemäße Meßsystem derart weiterzubilden, daß es unter Aufrechterhaltung einer hohen Betriebssicherheit, insbesondere Dichtheit auch im Langzeitbetrieb, mit geringem Herstellungsaufwand gefertigt werden kann, so daß der Kostenvorteil des Kunststoff-Federträgers in hohem Maße ausgenutzt werden kann. Ferner soll das gattungsgemäße Verfahren im gleichen Sinne verbessert werden.

Diese Aufgabe wird im Hinblick auf das Meßsystem durch das Meßsystem gemäß Patentanspruch 1 gelöst. Bei diesem ist erfindungsgemäß vorgesehen, daß einstückig mit dem Zwischenteil Eingriffsmittel ausgebildet sind, die in formschlüssigem Eingriff mit dem Federträger stehen, und daß das Zwischenteil auf seiner dem ersten Ende der Rohrfeder zugewandten Seite eine Ausnehmung aufweist, in die das erste Ende eingesetzt ist.

Bei dem erfindungsgemäßen Federträger bilden das metallische Zwischenteil und der Federträger aus dem polymeren Kunststoff eine Verbund-Baugruppe, die überwiegend aus Kunststoff besteht und somit kostengünstig beispielsweise durch Spritzgießen herstellbar ist. Lediglich derjenige Bereich dieser Verbund-Baugruppe, der mit dem ersten Ende der metallischen Rohrfeder verbunden ist, besteht aus Metall, so daß dort eine mechanisch feste und dauerhaft druckdichte Metall-Metall-Verbindung zwischen dem ersten Ende der Rohrfeder einerseits und dem Zwischenteil andererseits besteht. Diese Metall-Metall-Verbindung kann in an sich bekannte Weise sowohl durch Löten als auch durch Kleben hergestellt sein. Selbst wenn sie durch Kleben hergestellt worden ist, ist diese Verbindung - da es eine Klebeverbindung zwischen zwei Metallteilen ist - dauerhafter und zuverlässiger als die aus dem Stand der Technik bekannten Klebeverbindungen zwischen einer metallischen Rohrfeder und einem Federträger aus Kunststoff. Einstückig am Zwischenteil angeformt sind Eingriffsmittel, die in formschlüssigem Eingriff mit dem Federträger stehen. Dadurch, daß die Eingriffsmittel einstückig mit dem Zwischenteil ausgebildet sind, entfallen aufwendige Montagearbeiten. Der formschlüssige Eingriff dieser Eingriffsmittel mit dem Federträger sorgt für eine dauerhaft feste mechanische Verbindung zwischen dem Zwischenteil und dem Federträger und kann auf einfache Weise herbeigeführt werden.

Obwohl es grundsätzlich möglich ist, daß während der Herstellung des erfindungsgemäßen Meßsystems zunächst das Zwischenteil mit dem ersten Ende der Rohrfeder verbunden wird und erst danach das Zwischenteil am Federträger befestigt wird, wird vorzugsweise in der Weise vorgegangen, wie dies durch Patentanspruch 16 definiert ist, dessen Gegenstand den auf das Verfahren gerichteten Teil der Aufgabe löst. Erfindungsgemäß ist somit bei dem Verfahren gemäß dem Oberbegriff von Patentanspruch 16 vorgesehen, daß zunächst das Zwischenteil, an dem einstückig Eingriffsmittel ausgebildet sind, in formschlüssigen Eingriff mit dem Federträger gebracht und dadurch fest mit diesem verbunden wird und daß danach das erste Ende der Rohrfeder mit dem Zwischenteil fest verbunden wird.

Wenn in erfindungsgemäßer Weise gemäß Patentanspruch 16 vorgegangen wird, können die Rohrfeder und die VerbundBaugruppe aus dem Zwischenteil und dem Federträger, die den herkömmlichen metallischen Federträger ersetzt, auf die gleiche Weise und mit Hilfe der gleichen Vorrichtungen miteinander verbunden werden, wie sie bei herkömmlichen Meßsystemen aus einer metallischen Rohrfeder und einem metallischen Federträger zur Anwendung kommen. Abwandlungen der Rohrfeder, die den Zweck haben, diese für eine Verbindung mit einem Federträger aus Kunststoff geeignet zu machen, sind nicht notwendig. Ferner können die gleichen automatisierten Löt- oder Klebevorrichtungen, wie sie für Meßsysteme mit einem metallischen Federträger entwickelt worden sind, auch bei der Herstellung des erfindungsgemäßen Meßsystems zur Anwendung kommen. Die durch die Verwendung eines polymeren Kunststoffes als Werkstoff für den Federträger ermöglichten Kosteneinsparungen werden somit nicht weitgehend durch Mehrkosten für Modifikationen der Herstellungsvorrichtungen und der Rohrfeder kompensiert.

In vorteilhafter Ausbildung des erfindungsgemäßen Meßsystems kann vorgesehen sein, daß die im Zwischenteil vorgesehene Ausnehmung für das Ende der Rohrfeder in an sich bekannte Weise die Form einer seitlich offenen Nut (Anspruch 2) oder die Form eines Quaders, d.h. einer seitlich geschlossenen Nut, hat (Anspruch 3).

Das Zwischenteil ist vorzugsweise entweder aus Blech gestanzt und gebogen worden (Anspruch 13) oder durch maschinelle Bearbeitung als Frästeil hergestellt worden (Anspruch 14).

In vorteilhafter Ausbildung des erfindungsgemäßen Meßsystems kann ferner vorgesehen sein, daß das Zwischenteil einen den Boden der Ausnehmung bildenden Bodenabschnitt aufweist, von dessen von der Ausnehmung abgewandter Rückseite zumindest ein Vorsprung vorsteht, der die Eingriffsmittel bildet. Dieser zumindest eine Vorsprung kann während des Spritzgießens des Federträgers umspritzt werden (Anspruch 7).

Alternativ dazu kann vorgesehen sein, daß zwei Vorsprünge in Form von jeweils an entgegengesetzten Rändern des Bodenabschnitts angeformten Laschen vorgesehen sind, die am Federträger formschlüssig an diesem angreifend anliegen (Anspruch 8). Diese Laschen werden an den Federträger so angedrückt, daß sie dabei mit ihren freien Endabschnitten den Federträger hintergreifen und/oder mit an den Laschen angeformten Zähnen in den Federträger eingreifen. Vorzugsweise ist zwischen der Rückseite des Bodenabschnitts und dem Federträger eine Dichtung angeordnet, die den Übergangsbereich vom Anschlußkanal zur Öffnung im Zwischenteil nach außen abdichtet.

Weitere vorteilhafte Ausgestaltungen der Erfindung sind in den Unteransprüchen gekennzeichnet und ergeben sich aus der folgenden Beschreibung eines Ausführungsbeispiels anhand der Zeichnungen. Es zeigen:
Fig. 1 eine Vorderansicht einer Ausführungsform des erfindungsgemäßen Meßsystems;
Fig. 2 vergrößert eine Einzelheit A gemäß Fig. 1;
Fig. 3 eine Seitenansicht des Meßsystems gemäß Fig. 1;
Fig. 4 eine ausschnittsweise Ansicht aus Richtung B in Fig. 7;
Fig. 5 eine perspektivische Ansicht eines Zwischenteils des Meßsystems;
Fig. 6 einen gestanzten Zuschnitt für das Zwischenteil gemäß Fig. 5; und
Fig. 7 einzelne Schritte während der Herstellung des Meßsystems.

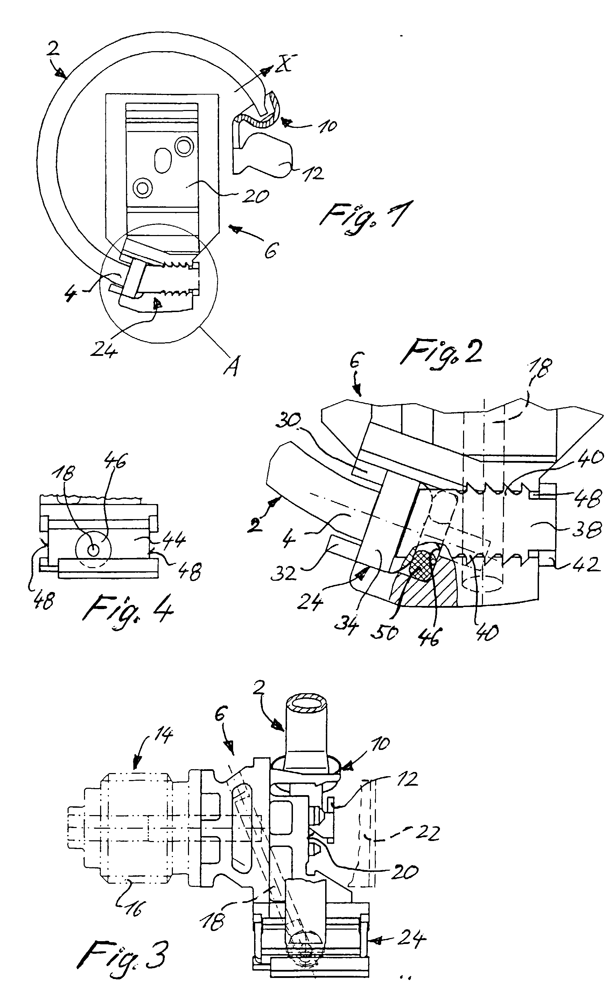

Fig. 1 zeigt in Vorderansicht ein Meßsystem. Dieses umfaßt eine Rohrfeder 2, die an ihrem einen, ersten Ende 4 fest mit einem sie tragenden Federträger 6 verbunden ist. Die innen hohle Rohrfeder 2 besteht aus einem metallischen Werkstoff, beispielsweise aus hochlegiertem Stahl, Kupfer- oder Kupferknetlegierungen oder Monel. An ihrem beweglichen, zweiten Ende 8 ist an die Rohrfeder 2 ein Endstück 10 angelötet, an dem ein Plättchen 12 angeformt ist.

Der Federträger 6 ist beispielsweise durch Spritzgießen einstückig aus einem polymeren Kunststoff gefertigt worden. Wie in Fig. 2 strichdoppelpunktiert gezeigt ist, ist auf der Rückseite des Federträgers 6, d.h. links in Fig. 3, am Federträger 6 ein Anschlußstück 14 angeformt. Dieses Anschlußstück ist mit einem Außengewinde 16 versehen, mit dessen Hilfe das Anschlußstück 14 mit einem nicht dargestellten System verschraubt werden kann, das das Druckmedium führt, dessen Druck gemessen werden soll. Wegen der Anordnung des Anschlußstücks 14 auf der Rückseite des Federträgers 6 handelt es sich beim dargestellten Ausführungsbeispiel um ein sogenanntes rückseitiges Meßsystem. Die Erfindung ist jedoch nicht auf ein solches rückseitiges Meßsystem beschränkt. Vielmehr ist es auch möglich, das Anschlußstück 14 auf der Unterseite (Fig. 1 und 3) des Federträgers 6 anzuordnen, so daß sich ein sogenanntes radiales Meßsystem ergeben würde.

Im Anschlußstück 14 und im Federträger 6 ist ein aus mehreren Abschnitten bestehender Anschlußkanal 18 ausgebildet, der einerseits mit dem Inneren der Rohrfeder 2 und andererseits mit dem das Druckmedium führenden System in Fluidverbindung steht, so daß durch den Anschlußkanal 18 hindurch der zu messende Druck in das Innere der Rohrfeder 2 gelangt und diese dadurch innen mit dem zu messenden Druck beaufschlagt ist.

Das vorstehend beschriebene Meßsystem ist für ein Manometer bestimmt, dessen übrige Teile und Systeme herkömmlich ausgebildet sein können. Im Zuge der Herstellung des Manometers wird auf der Vorderseite 20 des Federträgers 6 ein Zeigerwerk befestigt, von dem lediglich ausschnittsweise und gestrichelt eine Platine 22 in Fig. 3 angedeutet ist. Zwischen dem Zeigerwerk und dem Meßsystem ist durch eine nicht dargestellte Zugstange angeordnet, deren eines Ende gelenkig mit dem Plättchen 12 des Endstücks 10 verbunden ist, wozu das Plättchen mit einer Bohrung versehen wird. Das Zeigerwerk trägt einen nicht dargestellten Zeiger. Das Meßsystem und das Zeigerwerk sind in einem nicht dargestellten Gehäuse mit einer Sichtscheibe angeordnet. Zwischen dem Zeigerwerk und dem Zeiger ist ein nicht dargestelltes Zifferblatt angeordnet. Abhängig vom in der Rohrfeder 2 herrschenden Druck wird deren zweites, bewegliches Ende 8 in Richtung eines Pfeiles X mehr oder weniger weit ausgelenkt. Diese Auslenkung wird mittels des Endstücks 10 und der Zugstange zum Zeigerwerk übertragen und von diesem in eine Drehstellung des Zeigers umgewandelt, der auf dem Zifferblatt ein bestimmter Druckwert zugeordnet ist.

Aus der vorstehenden Erläuterung ergibt sich, daß der Federträger 6 die Rohrfeder 2 derart halten muß, daß das zweite Ende 8 und somit das Endstück 10 bei einem bestimmten Bezugsdruck stets eine genau definierte Position bezüglich des Zeigerwerkes und somit bezüglich des das Zeigerwerk tragenden Federträgers einnimmt, damit die kinematischen Verhältnisse zwischen dem beweglichen, zweiten Ende 8 der Rohrfeder 2 und dem Zeigerwerk in der Serienfertigung von Meßsystem zu Meßsystem möglichst gleich sind.

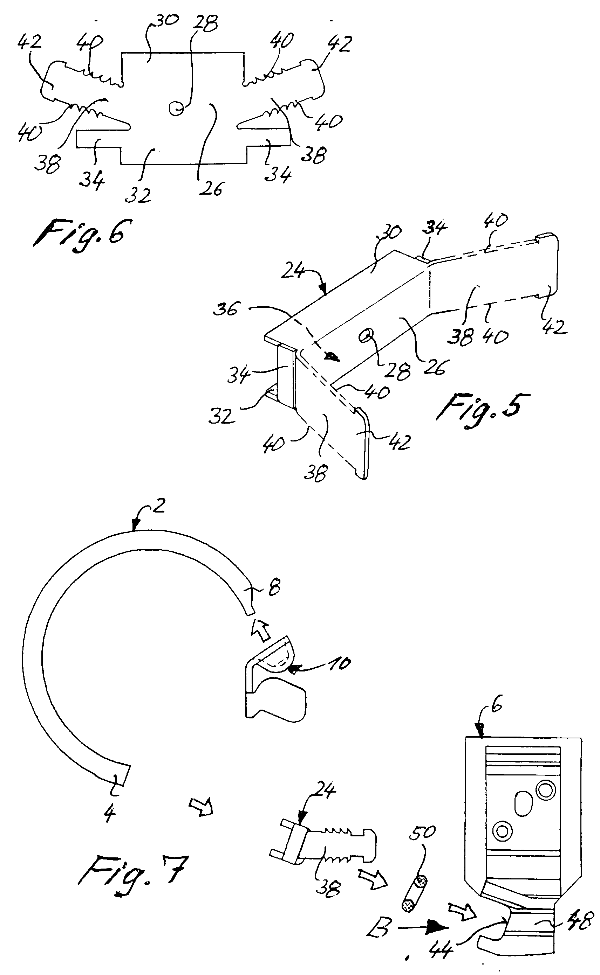

Die mechanisch feste und zugleich druckdichte Verbindung zwischen der Rohrfeder 2 und dem Federträger 6 bewirkt beim dargestellten Ausführungsbeispiel ein Zwischenteil 24, das aus einem metallischen Werkstoff besteht, welcher kompatibel zum Werkstoff der Rohrfeder 2 ist. Ein Ausführungsbeispiel dieses Zwischenteils 24 ist in Fig. 5 perspektivisch dargestellt. Dieses Ausführungsbeispiel des Zwischenteils 24 ist durch Stanzen aus Blech und Umbiegen hergestellt worden. Sein Stanzzuschnitt ist in Fig. 6 gezeigt, wobei die im folgenden erläuterten Abschnitte des Zwischenteils im Stanzzuschnitt gemäß Fig. 6 mit gleichen Bezugszeichen bezeichnet sind.

Das Zwischenteil 24 weist einen rechteckigen Bodenabschnitt 26 auf, in dessen Mitte eine Öffnung 28 ausgebildet ist. An den beiden Längsseiten des rechteckigen Bodenabschnitts 26 sind zwei rechteckige Wandabschnitte 30 und 32 angeformt, die derart zur Vorderseite des Bodenabschnitts 26 umgebogen sind, daß die beiden Wandabschnitte 30 und 32 zusammen mit dem Bodenabschnitt 26 ein U-förmiges Profil haben. An jeder der beiden Schmalseiten des Wandabschnitts 32 ist jeweils ein Querwandabschnitt 34 angeformt. Die beiden Querwandabschnitte 34 sind derart umgebogen, wie dies in Fig. 5 gezeigt ist, so daß der Bodenabschnitt 26, die beiden Wandabschnitte 30 und 32 sowie die beiden Querwandabschnitte 34 gemeinsam auf der Vorderseite des Zwischenteils 24 eine Ausnehmung 36 in Form eines Quaders bilden, deren Boden durch den Bodenabschnitt 26 gebildet ist.

An jeder der beiden Schmalseiten des rechteckigen Bodenabschnitts 26 ist eine Lasche 38 angeformt. Die beiden Laschen sind nach hinten umgebogen, so daß sie von der Rückseite des Zwischenteils 24 nach hinten vorstehende Vorsprünge bilden. Am fertigen Meßsystem (siehe Fig. 1, 2 und 3) schließen die beiden Laschen 38 mit dem Bodenabschnitt 26 einen Winkel von ungefähr 90° ein. In Fig. 5 ist dieser eingeschlossene Winkel größer, d.h. Fig. 5 zeigt die beiden Laschen 38 im noch nicht vollständig umgebogenen Zustand, der erst herbeigeführt wird, wenn das Zwischenteil 24 mit dem Federträger 26 verbunden wird. Jede Lasche 38 weist entlang ihren beiden Längsrändern Zähne 40 auf, die in Fig. 6 gezeigt sind, in Fig. 5 jedoch nur durch gestrichelte Darstellung der beiden Längsränder angedeutet sind. Die Endabschnitte 42 einer jeden Lasche 38 sind ohne Zähne ausgebildet. Die beiden Laschen 38 des Zwischenteils 24 bilden Eingriffsmittel, die am fertigen Meßsystem in formschlüssigem Eingriff mit dem Federträger 6 stehen.

Der Federträger 6 weist an seinem in den Figuren unteren Ende eine von seiner Vorderseite zu seiner Rückseite verlaufende Auflagefläche 44 auf (siehe auch Fig. 4), deren Abmessungen denen des Bodenabschnittes 26 des Zwischenteils 24 derart angepaßt sind, daß dieser Bodenabschnitt 26 auf der Auflagefläche 44 aufliegen kann. In der Auflagefläche 44 mündet der Anschlußkanal 18, wobei diese Mündung durch eine abgesetzte Ringschulter 46 umgeben ist. Von den seitlichen Schmalseiten der Auflagefläche 44 aus verläuft sowohl auf der Vorderseite als auch auf der Rückseite des Federträgers 6 jeweils eine Nut 48 nach hinten, d.h. nach rechts in Fig. 7. Die Abmessungen der beiden Nuten 48 sind denen der Laschen 38 des Zwischenteils 24 angepaßt.

Im folgenden wird insbesondere unter Bezugnahme auf Fig. 7 der Zusammenbau des vorstehend beschriebenen Meßsystems erläutert.

Es werden zunächst die in Fig. 7 gezeigten Elemente des Meßsystems, nämlich die Rohrfeder 2, das Endstück 10, das Zwischenteil 24 und der Federträger 26 einzeln gefertigt. Auf die Ringschulter wird eine Dichtung in Form eines O-Ringes 50 aus einem elastomeren Material gesetzt. Im Anschluß daran wird das Zwischenteil 24 am Federträger 6 angebracht. Das Zwischenteil hat dabei zunächst noch die Form gemäß Fig. 5, wobei die Laschen 38 mit dem Bodenabschnitt 24 einen Winkel größer als 90° einschließen. In dieser Form wird das Zwischenteil 24 mit der Rückseite seines Bodenabschnitts 26 derart auf die Auflagefläche 44 gesetzt und gegen diese angedrückt, daß zwischen der Rückseite des Bodenabschnitts 26 und der Ringschulter 46 der O-Ring eingeschlossen ist. Die Mündung des Anschlußkanals 18 und der Ort der Öffnung 28 im Bodenabschnitt 26 sind derart aufeinander abgestimmt, daß die Öffnung 28 im montierten Zustand des Zwischenteils 24 in Verbindung mit dem Anschlußkanal 18 steht, wobei dieser Übergangsbereich vom Anschlußkanal 18 zur Öffnung 28 durch den O-Ring 50 nach außen abgedichtet ist.

Während das Zwischenteil 24 gegen die Auflagefläche 44 gedrückt wird, werden die beiden Laschen 38 soweit nach innen umgebogen, daß sie in den Nuten 48 des Federträgers 6 liegen. Dabei werden sie zugleich mit solcher Kraft gegen den Federträger 6 angepreßt, daß sich die Zähne 40 in die seitlichen Nutwände der Nuten 48 einschneiden, wie dies insbesondere in Fig. 2 erkennbar ist. Auf diese Weise ist ein formschlüssiger Eingriff zwischen dem Zwischenteil 24 und dem Federträger 6 hergestellt worden. Außerdem werden die Endabschnitte 42 der beiden Laschen 38 derart umgebogen, daß sie am Federträger 6 auf dessen von der Auflagefläche 44 abgewandter Seite angreifen und somit den Federträger hintergreifen.

Die vorstehend beschriebenen Schritte während des Verbindens des Zwischenteils 24 mit dem Federträger 6 können auf einfache Weise automatisiert und maschinell ausgeführt werden. Ergebnis dieser Schritte ist eine Verbund-Baugruppe aus den Federträger 6, dem O-Ring 50 und dem Zwischenteil 24. An dieser Baugruppe bildet die Ausnehmung 36 des Zwischenteils 24 eine Ausnehmung, in die das erste Ende 4 der Rohrfeder 2 eingesetzt werden kann. Im Bereich dieser Ausnehmung besteht die Baugruppe aus einem metallischen Werkstoff, nämlich dem Werkstoff des Zwischenteils 24, so daß der Anschluß der Rohrfeder 2 an den Federträger 6 durch eine Metall-Metall-Verbindung mit den daraus resultierenden Vorteilen hergestellt werden kann. Mit Ausnahme dieses Bereichs besteht die Baugruppe aus dem polymeren Kunststoff des Federträgers 6, so daß dies entsprechende Kostenvorteile bei der Herstellung des Federträgers 6 mit sich bringt. Die Baugruppe aus dem Federträger 6 und dem Zwischenteil 24 kann im Bedarfsfall mit der Geometrie, insbesondere denjenigen Abmessungen und demjenigen Ort, der Ausnehmung 36 hergestellt werden, wie sie bei metallischen Federträgern üblich sind. Allerdings ergibt sich der zusätzliche Vorteil, daß die Ausnehmung 36 zur Aufnahme des ersten Endes 4 der Rohrfeder 2 auf einfache Weise auch seitlich geschlossen werden kann, nämlich mittels der Querwandabschnitte 34. Dies erleichtert ein nachfolgendes Löten im Vergleich zu dem Fall, daß die Ausnehmung ein seitlich offener Schlitz ist, wie dies bei metallischen Federträgern üblich ist.

Nachdem die Verbund-Baugruppe aus dem Zwischenteil 24, dem O-Ring 50 und dem Federträger 6 in vorstehend beschriebener Weise hergestellt worden ist und die Rohrfeder 2 mit dem Endstück 10 versehen worden ist, wird das erste Ende 4 der Rohrfeder 2 in die Ausnehmung 36 eingesetzt. Dies geschieht vorzugsweise in einer nicht dargestellten Vorrichtung mit geeigneten Werkstückaufnahmen für den Federträger 6 und das Endstück 10, so daß in dieser Vorrichtung die Rohrfeder 2 mit dem Endstück 10 einerseits und der Federträger 6 andererseits in der gewünschten Relativlage genau zueinander ausgerichtet gehalten werden. In dieser vorgegebenen Relativlage wird dann die Verbindung zwischen dem ersten Ende 4 und dem Zwischenteil 24 auf an sich bekannte Weise, beispielsweise durch Löten oder auch durch Kleben hergestellt.

Die Erfindung ist nicht auf das vorstehend beschriebene Ausführungsbeispiel des Meßsystems sowie das vorstehend beschriebene Ausführungsbeispiel des Verfahrens zur Herstellung des Meßsystems beschränkt. Andere Ausführungsformen der Erfindung sind möglich und ergeben sich aus den Patentansprüchen sowie der Beschreibungseinleitung. Beispielsweise kann der eingesetzte O-Ring 50 ersetzt sein durch ein angespritztes Elastomer. Ferner ist beim beschriebenen Ausführungsbeispiel das Zwischenteil 24 ein separates Bauteil. Abweichend hiervon kann das Zwischenteil 24 einstückig zusammen mit anderen Bauteilen gefertigt werden, beispielsweise einstückig mit der in Fig. 3 lediglich gestrichelt angedeuteten Platine 22 des Zeigerwerks.

Bei dem beschriebenen Ausführungsbeispiel ist der Federträger 6 ein separates Bauteil. Er kann jedoch auch einstückig mit anderen Bauteilen, beispielsweise dem Gehäuse des Manometers, ausgebildet sein.

Bei einem Meßsystem für ein Manometer, das eine Rohrfeder sowie einen Federträger aufweist, bestehen die Rohrfeder aus einem metallischen Werkstoff und der Federträger aus einem polymeren Kunststoff. Die Verbindung zwischen der Rohrfeder und dem Federträger ist mittels eines metallischen Zwischenteils hergestellt, das eine Ausnehmung aufweist, in die das feste Ende der Rohrfeder geklebt oder gelötet ist, und das angeformte Eingriffsmittel aufweist, die in formschlüssigem Eingriff mit dem Federträger stehen. Die Verbund-Baugruppe aus dem Zwischenteil und dem Federträger verbindet den Kostenvorteil der Herstellung des Federträgers aus Kunststoff mit den mechanischen Vorteilen und Dichtheitsvorteilen einer Metall-Metall-Verbindung für den Anschluß der Rohrfeder am Federträger. Die Herstellung des Meßsystems erfolgt derart, daß zunächst die Verbund-Baugruppe aus dem Federträger und dem Zwischenteil hergestellt wird, bevor auf üblicher Weise die Verbindung mit der Rohrfeder hergestellt wird.

## Patentansprüche

1. Meßsystem für ein Manometer, mit einer innen mit dem zu messenden Druck beaufschlagten Rohrfeder (2) aus einem metallischen Werkstoff und mit einem Federträger (6) aus einem polymeren Kunststoff, wobei die Rohrfeder an ihrem einen, ersten Ende (4) mit einem metallischen Zwischenteil (24) fest verbunden ist, das seinerseits am Federträger (6) befestigt ist, und wobei das Zwischenteil (24) eine Öffnung (28) aufweist, durch die hindurch das Innere der Rohrfeder (2) in Fluidverbindung mit einem im Federträger (6) ausgebildeten Anschlußkanal (18) steht, dadurch gekennzeichnet, daß einstückig mit dem Zwischenteil (24) Eingriffsmittel (38) ausgebildet sind, die in formschlüssigem Eingriff mit dem Federträger (6) stehen, und daß das Zwischenteil (24) auf seiner dem ersten Ende (4) der Rohrfeder (2) zugewandten Seite eine Ausnehmung (36) aufweist, in die das erste Ende (4) eingesetzt ist.

2. Meßsystem nach Anspruch 1, dadurch gekennzeichnet, daß die Ausnehmung die Form einer seitlich offenen Nut hat.

3. Meßsystem nach Anspruch 1, dadurch gekennzeichnet, daß die Ausnehmung (36) die Form eines Quaders hat.

4. Meßsystem nach einem der Ansprüche 1 bis 3, dadurch gekennzeichnet, daß das erste Ende (4) der Rohrfeder (2) mit dem Zwischenteil (24) verlötet ist.

5. Meßsystem nach einem der Ansprüche 1 bis 3, dadurch gekennzeichnet, daß das erste Ende (4) der Rohrfeder (2) mit dem Zwischenteil (24) verklebt ist.

6. Meßsystem nach einem der Ansprüche 1 bis 5, dadurch gekennzeichnet, daß das Zwischenteil (24) einen den Boden der Ausnehmung (36) bildenden Bodenabschnitt (26) aufweist, von dessen von der Ausnehmung (36) abgewandter Rückseite zumindest ein Vorsprung (38) vorsteht, der die Eingriffsmittel bildet.

7. Meßsystem nach Anspruch 6, dadurch gekennzeichnet, daß der Vorsprung während des Spritzgießens des Federträgers (6) umspritzt worden ist.

8. Meßsystem nach Anspruch 6, dadurch gekennzeichnet, daß zwei Vorsprünge in Form von jeweils an entgegengesetzten Rändern des Bodenabschnitts (26) angeformten Laschen (38) vorgesehen sind, die am Federträger (6) formschlüssig an diesem angreifend anliegen.

9. Meßsystem nach Anspruch 8, dadurch gekennzeichnet, daß jede der beiden Laschen (38) einen umgebogenen Endabschnitt (42) aufweist, der auf der vom Bodenabschnitt (26) abgewandten Seite des Federträgers (6) an diesem anliegt.

10. Meßsystem nach Anspruch 8 oder 9, dadurch gekennzeichnet, daß die Laschen (38) jeweils in einer Nut (48) des Federträgers (6) liegen und zumindest an einem ihrer Längsränder Zähne (40) aufweisen, die in die zugeordnete Nutwand gedrückt sind.

11. Meßsystem nach einem der Ansprüche 8 bis 10, dadurch gekennzeichnet, daß zwischen der Rückseite des Bodenabschnitts (26) und dem Federträger (6) eine Dichtung (50) angeordnet ist, die den Übergangsbereich vom Anschlußkanal (18) zur Öffnung (28) im Zwischenteil (24) nach außen abdichtet.

12. Meßsystem nach Anspruch 11, dadurch gekennzeichnet, daß die Dichtung am Federträger (6) angeformt ist.

13. Meßsystem nach Anspruch 11, dadurch gekennzeichnet, daß am Federträger (6) eine Ringschulter (46) ausgebildet ist, auf der als Dichtung ein O-Ring (50) sitzt.

14. Meßsystem nach einem der Ansprüche 1 bis 13, dadurch gekennzeichnet, daß das Zwischenteil (24) aus Blech gestanzt und gebogen worden ist.

15. Meßsystem nach einem der Ansprüche 1 bis 13, dadurch gekennzeichnet, daß das Zwischenteil ein Frästeil ist.

16. Verfahren zur Herstellung eines Meßsystems für ein Manometer, wobei eine innen mit dem zu messenden Druck beaufschlagte Rohrfeder (2) aus einem metallischen Werkstoff, ein Federträger (6) aus einem polymeren Kunststoff und ein zwischen einem ersten Ende (4) der Rohrfeder (2) und dem Federträger (6) angeordnetes, metallisches Zwischenteil (24) fest miteinander verbunden werden, dadurch gekennzeichnet, daß zunächst das Zwischenteil (24), an dem einstückig Eingriffsmittel (38) ausgebildet sind, in formschlüssigen Eingriff mit dem Federträger (6) gebracht und dadurch fest mit diesem verbunden wird und daß danach das erste Ende (4) der Rohrfeder (2) mit dem Zwischenteil (24) fest verbunden wird.

17. Verfahren nach Anspruch 16, dadurch gekennzeichnet, daß die feste Verbindung zwischen dem ersten Ende (4) der Rohrfeder (2) und dem Zwischenteil (24) durch Löten hergestellt wird.

18. Verfahren nach Anspruch 16, dadurch gekennzeichnet, daß die feste Verbindung zwischen dem ersten Ende (4) der Rohrfeder (2) und dem Zwischenteil (24) durch Kleben hergestellt wird.

19. Verfahren nach einem der Ansprüche 16 bis 18, dadurch gekennzeichnet, daß die Eingriffsmittel des Zwischenteils (24) während des Spritzgießens des Federträgers (6) umspritzt werden.

20. Verfahren nach einem der Ansprüche 16 bis 18, wobei das Zwischenteil (24) einen Bodenabschnitt (26) und seitlich an diesem angeformte Laschen (38) aufweist, dadurch gekennzeichnet, daß das Zwischenteil (24) mit dem Federträger (6) dadurch fest verbunden wird, daß die Laschen (38) an den Federträger (6) angedrückt werden und dabei mit ihren freien Endabschnitten (42) den Federträger (6) hintergreifen und/oder dabei mit an den Laschen (38) angeformten Zähnen (40) in den Federträger (6) eingreifen.

## Claims

1. Measuring System for a manometer, comprising a tubular spring (2), which is internally loaded with a pressure to be measured and made of a metal material, and a spring support (6) of a polymer plastic, and the tubular spring is at its one first end (4) firmly connected to a metal intermediate part (24) which is itself attached to the spring support (6), and the intermediate part (24) comprises an opening (28) by means of which the inside of the tubular spring (2) is in a fluid connection with a connecting channel (18) which is formed in the spring support (6), **characterised in that** integrated with the intermediate part (24) are engagement means (38) which are positively engaged with the spring support (6), and that the intermediate part (24) has on its side facing towards the first end (4) of the tubular spring (2) a cutout (36) Into which the first end (4) is inserted.

2. Measuring system according to claim 1, **characterised in that** the cutout has the form of a laterally open groove.

3. Measuring system according to Claim 1, **characterised in that** the cutout (36) has the shape of a square.

4. Measuring system according to one of Claims 1 to 3, **characterised in that** the first end (4) of the tubular spring (2) is soldered onto the intermediate part (24).

5. Measuring system according to one ot Claims 1 to 3, **characterised in that** the first end (4) of the tubular spring (2) is glued to the intermediate part (24).

6. Measuring system according to one of Claims 1 to 5, **characterised in that** the intermediate part (24) comprises a curved section (26), which forms the bottom of the cutout (36) and from where at least one profusion (38) protrudes from its rear facing away from the cutout (36), which forms the engagement means.

7. Measuring system according to Claim 6, **characterised in that** the protrusion is sprayed around during extrusion casting of the spring support (6).

8. Measuring system according to Claim 6, **characterised in that** two protrusions are provided in the form of ledges (38) integrated on respectively opposing edges of the bottom section (26) which abut the spring support (6) with positive engagement.

9. Measuring system according to Claim 8, **characterised in that** each of the two ledges (38) comprises a bent end section (42) which abuts the spring support (6) at its side facing away from the bottom section (26).

10. Measuring system according to Claim 8 or 9, **characterised in that** the ledges (38) lie in a respective groove (48) of the spring support (6) and have at least at are of its longitudinal edges teeth (40) which are pushed into an associated groove wall.

11. Measuring system according to one of Claims 8 to 10, **characterised in that** between the rear of the bottom section (26) and the support spring (6) is arranged a seal (50) which outwardly seals the transitional area of connecting channel (18) to the opening (26) in the intermediate part (24).

12. Measuring system according to Claim 11, **characterised in that** the seal is integrated with the spring support (6).

13. Measuring system according to Claim 11, **characterised in that** on the spring support (6) formed an annular shoulder (46) with an O-ring (50), which serves as a seal, seated thereon.

14. Measuring system according to one of Claims 1 to 13, **characterised in that** the intermediate part (24) is punched out of a metal sheet and bent.

15. Measuring system according to one of Claims 1 to 13, **characterised in that** the intermediate part is a milled part.

16. Process for the manufacture of a measuring system for a manometer, in which a tubular spring (2), which is internally loaded with a pressure to be measured and made of a metal material, and a spring support (6) of a polymer plastic and a metal intermediate part (24), which is arranged between a first end (4) of the tubular spring (2) and the spring support (6). are firmly joined together, **characterised in that** initially the intermediate part (24) with integrated engagement means (38) is positively engaged with the spring support (6) and thus firmly connected thereto, and thereafter the first end (4) of the tubular spring (2) is firmly connected to the intermediate part (24).

17. Process according to Claim 16, **characterised in that** the firm connection between the first end (4) of the tubular spring (2) and the intermediate part (24) is established by soldering.

18. Process according to Claim 16, **characterised in that** the firm connection between the first end (4) of the tubular spring (2) and the intermediate part (24) is established by gluing.

19. Process according to one of Claims 16 to 18, **characterised in that** the engagement means of the intermediate part (24) are sprayed around during injection moulding of the spring support (6).

20. Process according to one of Claims 16 to 18, and the intermediate part (24) comprises a bottom section (26) and ledges (38) laterally integrated therewith, **characterised in that** the intermediate part (24) is thus firmly connected to the spring support (6) in that the ledges (38) are pushed onto the spring support (6), thereby reaching with their free end sections (42) behind the spring support (6) and/or engage the spring support (6) by way of teeth (40) which are integrated with the ledges (38).

## Revendications

1. Système de mesure pour un manomètre, comportant un tube-ressort (2) en un matériau métallique, soumis intérieurement à la pression à mesurer, et un support de ressort (6) en une matière plastique polymère, le tube-ressort étant relié à sa première extrémité (4) à une pièce intermédiaire (24) métallique, laquelle de son côt" est fixée au support de ressort (6), et la pièce intermédiaire (24) comportant un orifice (28) par lequel l'espace intérieur du tube-ressort (2) se trouve en liaison pour fluide avec un canal de jonction (18) réalisé dans le support de ressort (6), caractérisé par le fait que des moyens de prise(38) sont réalisés d'un seul tenant avec la pièce intermédiaire (24), lesquels moyens se trouvent en prise à engagement positif avec le support de ressort (6), et par le fait que la pièce intermédiaire (24) sur son côté tourné vers la première extrémité (4) du tube-ressort (2) comporte un évidement (36) dans lequel est insérée la première extrémité (4).

2. Système de mesure selon la revendication 1, caractérisé par le fait que l'évidement a la forme d'une rainure ouverte latéralement.

3. Système de mesure selon la revendication 1, caractérisé par le fait que l'évidement (36) a la forme d'un parallélépipède rectangle.

4. Système de mesure selon l'une des revendications 1 à 3, caractérisé par le fait que la première extrémité (4) du tube-ressort (2) est soudée à la pièce intermédiaire (24).

5. Système de mesure selon l'une des revendications 1 à 3, caractérisé par le fait que la première extrémité (4) du tube-ressort (2) est collée à la pièce intermédiaire (24).

6. Système de mesure selon l'une des revendications 1 à 5, caractérisé par le fait que la pièce intermédiaire (24) comporte une section de fond (26) formant le fond de l'évidement (36), au moins une saillie (38), qui constitue les moyens de prise, dépassant de la face arrière de cette section éloignée de l'évidement (36).

7. Système de mesure selon la revendication 6, caractérisé par le fait que la saillie est encastrée lors du moulage par injection du support de ressort (6).

8. Système de mesure selon la revendication 6, caractérisé par le fait que deux saillies sont prévues sous la forme de languettes (38) formées respectivement sur des bords opposés de la section de fond (26), lesquelles languettes s'appliquent contre le support de ressort (6) en prise avec celui-ci par engagement positif.

9. Système de mesure selon la revendication 8, caractérisé par le fait que chacune des deux languettes (38) comporte une section d'extrémité (42) recourbée qui, du côté du support de ressort (6) éloigné de la section de fond (26), s'applique contre ce support de ressort.

10. Système de mesure selon la revendication 8 ou 9, caractérisé par le fait que les languettes (38) se trouvent respectivement dans une rainure (48) du support de ressort (6) et comportent des dents (40) au moins sur un de leurs bords longitudinaux, dents qui sont enfoncées dans la paroi de rainure associée.

11. Système de mesure selon l'une des revendications 8 à 10, caractérisé par le fait qu'un joint d'étanchéité (50) est disposé entre la face arrière de la section de fond (26) et le support de ressort (6), joint qui établit une étanchéité vers l'extérieur pour la zone de transition du canal de jonction (18) à l'orifice (28) dans la pièce intermédiaire (24).

12. Système de mesure selon la revendication 11, caractérisé par le fait que le joint d'étanchéité est formé sur le support de ressort (6).

13. Système de mesure selon la revendication 11, caractérisé par le fait qu'un épaulement annulaire (46) est réalisé sur le support de ressort (6), épaulement sur lequel siège une bague torique (50) en tant que joint d'étanchéité.

14. Système de mesure selon l'une des revendications 1 à 13, caractérisé par le fait que la pièce intermédiaire (24) est estampée dans une tôle et est pliée.

15. Système de mesure selon l'une des revendications 1 à 13, caractérisé par le fait que la pièce intermédiaire est une pièce de fraisage.

16. Procédé pour la fabrication d'un système de mesure pour un manomètre, dans lequel sont reliés les uns aux autres de manière fixe un tube-ressort (2) en un matériau métallique soumis intérieurement à la pression à mesurer, un support de ressort (6) en une matière plastique polymère et une pièce intermédiaire métallique (24) disposée entre une première extrémité (4) du tube-ressort (2) et le support de ressort (6), caractérisé par le fait que d'abord la pièce intermédiaire (24), sur laquelle sont réalisés d'un seul tenant des moyens de prise (38), est mise en prise par engagement positif avec le support de ressort (6) et de ce fait est reliée de manière fixe à celui-ci, et qu'ensuite la première extrémité (4) du tube-ressort est reliée de manière fixe à la pièce intermédiaire (24).

17. Procédé selon la revendication 16 caractérisé par le fait que la liaison fixe entre la première extrémité (4) du tube-ressort (2) et la pièce intermédiaire (24) est réalisée par soudage.

18. Procédé selon la revendication 16 caractérisé par le fait que la liaison fixe entre la première extrémité (4) du tube-ressort (2) et la pièce intermédiaire (24) est réalisée par collage.

19. Procédé selon l'une des revendications 16 à 18, caractérisé par le fait que les moyens de prise de la pièce intermédiaire (24) sont encastrés lors du moulage par injection du support de ressort (6).

20. Procédé selon l'une des revendications 16 à 18, dans lequel la pièce intermédaire (24) comporte une section de fond (26) et des languettes (38) formées latéralement sur celle-ci, caractérisé en ce que la pièce intermédiaire (24) est reliée de manière fixe au support de ressort (6) du fait que les languettes (38) sont pressées contre le support de ressort (6) et viennent en prise derrière le support de ressort (6) par leur section d'extrémité (42) libre et/ou viennent en prise dans le support de ressort (6) par des dents (40) formées sur les languettes (38).
